(19) **Europäisches Patentamt / European Patent Office / Office européen des brevets**

(11) **EP 3 061 193 B1**

(12) **FASCICULE DE BREVET EUROPEEN**

(45) Date de publication et mention de la délivrance du brevet:
**04.10.2017 Bulletin 2017/40**

(21) Numéro de dépôt: **14790028.6**

(22) Date de dépôt: **14.10.2014**

(51) Int Cl.:
*H04B 1/10* *(2006.01)*      *G01S 19/34* *(2010.01)*

(86) Numéro de dépôt international:
**PCT/EP2014/071947**

(87) Numéro de publication internationale:
**WO 2015/058994 (30.04.2015 Gazette 2015/17)**

(54) **PROCÉDÉ DE GESTION DE LA CONSOMMATION, ET CHAÎNE DE RÉCEPTION METTANT EN OEUVRE UN TEL PROCÉDÉ.**

VERBRAUCHSMANAGEMENTVERFAHREN UND AUFNAHMEKETTE ZUR IMPLEMENTIERUNG SOLCH EINES VERFAHRENS

CONSUMPTION MANAGEMENT METHOD, AND RECEIVING CHAIN FOR IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.10.2013 FR 1302474**

(43) Date de publication de la demande:
**31.08.2016 Bulletin 2016/35**

(73) Titulaire: **Thales**
**92400 Courbevoie (FR)**

(72) Inventeurs:
• **GARREC, Patrick**
  **F-33700 Merignac (FR)**
• **PLAZE, Jean-Philippe**
  **F-78390 Bois D'arcy (FR)**
• **MALLET GUY, Benoît**
  **F-33600 Pessac (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
WO-A2-2008/106354      US-A1- 2005 026 564
US-A1- 2005 104 766      US-A1- 2010 171 659

**Description**

La présente invention concerne un procédé de gestion de la consommation énergétique de composants électroniques dans une chaîne de réception de signaux électromagnétiques. Elle concerne également une chaîne de réception mettant en oeuvre un tel procédé. L'invention s'applique notamment pour les amplificateurs faible bruit et pour les divers organes de réception électroniques, par exemple dans les radars ou les systèmes de télécommunication. Elle concerne particulièrement les systèmes d'antennes multifonctions et les réseaux ou antennes à balayage électronique. Plus généralement, l'invention s'applique à tous dispositifs d'amplification en réception lorsque qu'une optimisation de la consommation d'énergie est recherchée.

Dans les chaînes de réception, les amplificateurs faible bruits, appelés par la suite LNA (Low Noise Amplifier) posent des problèmes de consommation d'énergie. Leur consommation importante est principalement liée à des exigences de linéarité. Une raison du besoin de linéarité réside dans la nécessité de limiter la saturation ainsi que les harmoniques et les produits de modulation liés à ces saturations et non linéarités.

Les harmoniques sont les multiples fréquentiels des signaux forts à n fois la fréquence initiale. En cas de large bande ces signaux parasites sont contenus dans la bande passante utile et sont gênants pour le traitement du signal en sortie de réception. Les autres problèmes connus sont les produits d'intermodulation qui sont générés en cas de non linéarité. Ils apparaissent en présence de deux signaux faiblement espacés en fréquence. On caractérise la mesure des ces produits par un développement polynomiale basé sur les suites de Taylor, le troisième ordre correspondant au troisième produit de la suite de Taylor. La mesure est caractérisée par ce troisième ordre et est connu sous le nom d'IP3 ou TOI (Third Order Intercept).

Dans le cas d'un amplificateur large bande, par exemple avec un rapport 4, la réception d'un signal fort $F_0$ et d'un signal faible à une autre fréquence génère des harmoniques liées à la distorsion, distorsion qui est causée par la non linéarité de l'amplificateur. La non linéarité peut alors être assimilée à un mélangeur et donner des produits de mélange entre la fréquence du signal fort et les harmoniques : $F_0 + f_1$, $F_0 + 2f_1$, ... $F_0 + nf_1$, ... Plus la bande passante est importante, plus l'effet sera important.

Une nécessité opérationnelle des LNA est leur robustesse face aux agressions externes. Les effets de ces agressions sont souvent limités par la technologie utilisée et la valeur de la tension d'alimentation. Plus la tension d'alimentation est importante, plus le composant est résistant mais plus il consomme d'énergie. Cette consommation est liée à la classe de l'amplification et aux courants et tensions employés pour éviter les saturations en présence de courants forts.

Les technologies qui permettent une réception large bande et une dynamique importante sont récentes, une dynamique importante correspondant à une large plage de valeurs de fonctionnement en entrée du LNA. Cependant ces technologies sont fortement consommatrices de courant si l'on souhaite une linéarité sur toute la bande de fréquence. L'usage d'amplificateurs logarithmiques dans les détecteurs de radar permet d'obtenir des dynamiques importantes au détriment de la linéarité.

L'usage d'amplificateurs à bande étroite permet d'obtenir des linéarités sur des plages de fonctionnement importantes sans être perturbé par les échos des harmoniques d'ordre 2 et supérieurs, ou des signaux hors bande utile. Le besoin d'avoir des systèmes multifonction, notamment pour minimiser les ouvertures antennaires est maintenant une nécessité pour compacter les senseurs. Les progrès de la technologie permettent d'amplifier des signaux occupant une large bande de fréquence et de grande dynamique. Cependant, un prix à payer pour conjuguer ces deux avantages est la consommation des LNA qui tend à devenir très significative lorsque l'on est en présence d'une antenne réseau et qu'il y a autant de LNA que de modules actifs. On peut même atteindre un paradoxe dans le fait que la partie réception consomme plus que la partie émission.

Un document US2005/0104766 divulgue un procédé de gestion de consommation électrique dans une chaîne de réception radar.

Un but de l'invention est notamment de permettre l'utilisation de LNA et autres circuits d'une chaîne de réception bénéficiant d'une large bande de fréquence et d'une grande dynamique tout en limitant la consommation d'énergie. A cet effet, l'invention a pour objet un procédé de gestion de la consommation énergétique d'au moins un composant électronique dans une chaîne de réception radar, ledit procédé comportant une étape préliminaire d'élaboration d'une table contenant des valeurs représentatives du niveau de puissance de signaux reçus, chacune desdites valeurs étant contenue dans une case adressée au moins par un triplet formé d'une grandeur correspondant à une mesure du niveau de puissance d'un signal reçu d'une cible, d'une grandeur correspondant à la distance deladite cible et d'une grandeur correspondant à l'azimut de ladite cible, ledit procédé effectuant pour chaque signal reçu, issu d'une récurrence radar d'ordre n, les étapes suivantes :

- une étape de lecture de mesure du niveau puissance du signal reçu ;
- une étape d'adressage de ladite table en fonction de ladite mesure, de la distance et de l'azimut de ladite cible, une première valeur de niveau de puissance étant alors adresssée ;

- une étape d'extrapolation du niveau de puissance du prochain signal reçu issue de la récurrence radar suivante d'ordre n+1, fonction de ladite première valeur et d'un nombre donné de valeurs de ladite table adressées par glissement d'adresses depuis l'adresse de ladite première valeur selon les adresses de mesure de niveau de puissance, ledit nombre donné étant fonction de la vitesse du porteur de ladite chaîne de réception, ladite étape étant appliquée pour le signal reçu d'ordre n+1,

la valeur de consigne de la consommation dudit au moins composant électronique étant fonction au moins de l'extrapolation du niveau de puissance reçu et de la position de ladite cible.

Les signaux étant reçus par récurrences, par rafale et/ou par tour d'antenne couplée à ladite chaîne de réception, ladite table comporte par exemple des valeurs représentatives du niveau de puissance de signaux reçus dans la récurrence précédente, dans la rafale précédente et/ou dans les tours d'antenne précédents.

Dans un mode de mise en oeuvre particulier, les grandeurs du triplet étant des valeurs échantillonnées de mesure, de distance et d'azimut.

Les adresses sont par exemple décalées en distance et en azimut selon les mouvements du porteur de ladite chaîne de réception.

L'extrapolation est par exemple égale à l'amplitude moyenne de la première valeur adressée et des M valeurs adressées par glissement d'adresse, augmentée de K fois l'écart type.

La consigne de consommation est par exemple déterminée par la consigne de la tension d'alimentation dudit composant et/ou par la consigne du courant de polarisation dudit composant.

L'alimentation dudit au moins composant est par exemple mise à zéro lorsque ledit niveau de puissance dépasse un seuil donné.

L'invention a également pour objet une chaîne de réception de signaux électromagnétiques mettant en oeuvre le procédé selon l'une quelconque des revendications précédentes, ladite chaîne comportant au moins un amplificateur faible bruit dont la consommation énergétique est fonction d'une consigne définie par ledit procédé, un convertisseurs analogique-numérique convertissant les signaux issus dudit amplificateur et une table contenant des valeurs représentatives du niveau de puissance de signaux reçus.

La chaîne de réception comporte par exemple :

- un mélangeur en sortie de l'amplificateur faible bruit, ledit mélangeur mélangeant le signal issu de l'amplificateur faible bruit avec un signal d'oscillateur local, la consommation énergétique dudit mélangeur étant fonction d'une consigne définie par ledit procédé ;
- un filtre filtrant le signal mélangé en sortie du mélangeur ;
- un amplificateur dont l'entrée est reliée à la sortie du filtre et connecté en sortie à l'entrée dudit convertisseur analogique-numérique, la consommation énergétique dudit amplificateur étant définie par ledit procédé.

D'autres caractéristiques et avantages de l'invention apparaîtront à l'aide de la description qui suit faite en regard de dessins annexés qui représentent :

- La figure 1, un exemple de chaîne de réception radar selon l'invention ;
- Les figures 2a, 2b et 2c, des courbes illustrant respectivement la variation du gain en puissance, du facteur de bruit et des performances de linéarité ;
- Les figures 3a et 3b, une illustration de la commutation du signal pour plusieurs niveaux de tension de polarisation d'un amplificateur faible bruit ;
- La figure 4, une illustration du signal de sortie Vs en fonction du signal d'entrée pour différentes valeurs de tensions d'alimentation et de courant de polarisation d'un amplificateur faible bruit.

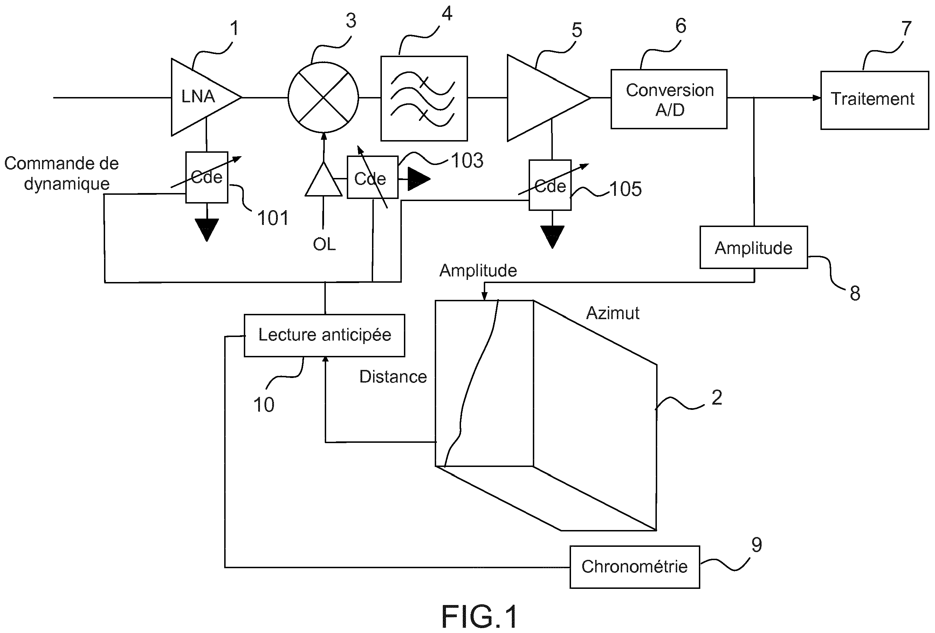

La figure 1 illustre le principe de fonctionnement de l'invention. A cet effet, il décrit un exemple de réalisation d'une partie d'une chaîne de réception, par exemple radar. Le dispositif décrit comporte en entrée un amplificateur LNA 1. L'invention limite la consommation importante d'énergie, et diminue aussi les contraintes induites par une telle consommation (génération et acheminement de l'énergie, refroidissement notamment), en permettant de conjuguer les avantages de la dynamique, linéarité et bande passante, sans consommation excessive. Le principe de la solution apportée par l'invention repose sur une gestion appropriée de la consommation en prenant en compte les contraintes de linéarité uniquement en cas d'apparition de signaux forts. A cet effet, l'amplificateur LNA 1 se comporte comme un amplificateur de petits signaux et commute en amplificateur de signaux forts en cas d'apparition de signal fort. L'invention optimise la consommation du LNA, augmente l'IP3 en cas de nécessité et protège le composant par augmentation de sa tension d'alimentation électrique ou suppression de son alimentation. Il est connu qu'un composant est protégé en fonction de la tension maximum de son alimentation. Plus son alimentation est élevée et plus il est robuste, mais plus il consomme comme cela a été indiqué précédemment. Un dispositif selon l'invention utilise une cartographie des signaux externes ou interne au composant, stockée dans une mémoire 2, et change dynamiquement le mode de fonctionnement du composant 1 en fonction du niveau de signal détecté : signal faible ou signal fort. Cette cartographie est un modèle de l'historique des signaux reçus.

Le courant de polarisation ou la tension d'alimentation est donc dynamiquement adaptée en fonction de ce niveau, c'est-à-dire en fait en fonction du besoin opérationnel. Pour un composant de type bipolaire, on peut agir sur le courant de polarisation alors que pour un composant de type MOS on peut agir sur la tension d'alimentation. Pour la suite de la description, on assimilera la cartographie à la mémoire qui la contient. Comme on le verra par la suite, cette cartographie peut être une table à trois dimensions. La valeur limite séparant un signal faible d'un signal fort est déterminée a priori et peut varier d'une application à l'autre. Le composant 1 dont la consommation est à optimiser peut être un amplificateur faible bruit (LNA), mais pas uniquement.

Si les niveaux des signaux sont très élevés, pour éviter de saturer et par là-même d'avoir des harmoniques dont on ne peut plus s'affranchir, on augmente la tension d'alimentation dynamiquement pour repousser la tension de coude le plus loin possible, ceci en fonction de la technologie. L'autre paramètre est le courant de polarisation qui peut également être adapté pour repousser la limite de saturation. Si le niveau des signaux est encore plus important et risque d'endommager le composant 1 par une surchauffe, en dépassant un seuil donné, une mise à zéro ou coupure des alimentations permet d'éviter la destruction du composant. Cette mise à la masse est maintenue aussi longtemps que les niveaux dangereux sont présents en entrée du composant. Ces niveaux de puissance sont extrapolés par le procédé selon l'invention qui permet ainsi avantageusement de protéger les composants contre des niveaux de puissance pouvant les endommager.

Pour anticiper le niveau des signaux entrant dans le composant 1, une extrapolation est faite en fonction de la première récurrence de la rafale de signaux reçus, dans le cas d'un fonctionnement par rafale. Pour un fonctionnement continu, un calcul de l'amplitude moyenne et de l'écart type glissants puis une consigne basée sur la moyenne augmentée de K fois l'écart type est élaborée, K étant fonction de la statistique des signaux et de l'acceptation du risque de saturation. Une extrapolation de tour d'antenne à tour d'antenne peut également être mise en oeuvre, recalée de la vitesse du porteur et avec les informations de statistique des signaux considérés.

La description de l'exemple de réalisation de la figure 1 ci-après illustre le principe de l'invention en détaillant notamment ces fonctions. Dans cet exemple, on optimise la consommation d'un amplificateur fable bruit 1.

L'amplificateur faible bruit (LNA) 1 est suivi d'un mélangeur 3. Ce dernier reçoit sur une première entrée le signal issu du LNA et sur une deuxième entrée un signal à une fréquence dite intermédiaire. Il s'agit d'un cas de réception hétérodyne où le signal reçu est transposé via le mélangeur 3 à une fréquence intermédiaire FI. Le signal de sortie du mélangeur est donc le signal de réception porté à la fréquence intermédiaire. Ce signal est par exemple filtré par un filtre 4. Un amplificateur 5, dit amplificateur FI, est connecté en sortie du filtre 4 afin d'amplifier le signal issu de ce filtre. L'amplificateur FI est connecté en sortie à un convertisseur analogique-numérique 6. Le signal numérisé est pris en compte par des moyens de traitement 7. Selon l'invention, le LNA 1, mais aussi d'autres composants de la chaîne, sont commandés dynamiquement en tension ou en courant de polarisation comme cela sera décrit par la suite pour mettre en oeuvre l'optimisation de la consommation tout en assurant la bonne protection des composants. La commande dynamique est fonction du signal de sortie extrapolé, le signal de sortie étant par exemple mesuré en sortie du convertisseur 6. Plus particulièrement, une mesure 8 de l'amplitude du signal de sortie est mesurée, cette amplitude donnant l'information sur le niveau du signal. L'optimisation de la consommation du LNA 1 est ainsi réalisée en fonction de l'extrapolation du signal de sortie.

Le LNA 1 doit combiner un facteur de bruit faible avec un gain donné et une grande stabilité dans une grande bande de fréquence, la stabilité correspondant à une absence d'oscillations. Ce type d'amplificateur est souvent en classe A, avec typiquement 20% du courant utile servant à polariser l'amplificateur, de façon à placer le point de repos au centre des possibilités d'évolution en tension et en courant tout en restant dans la zone linéaire.

Un besoin notable dans les circuits d'amplification faible bruit à large bande est de ne pas saturer et de rester linéaire sur une grande dynamique. Ceci pour permettre une amplification des petits et des grands signaux. Le fait d'avoir un très bon facteur de bruit, un grand gain et une stabilité sur toute la bande de fréquences tout en consommant peu revient à résoudre la quadrature du cercle. La linéarité a un coût énergétique car elle exige une tension d'alimentation élevée et des courants de polarisation forts pour rester dans la zone linéaire. Une stabilité parfaite se fait au détriment du gain. Des niveaux d'IP3 importants imposent des courants de polarisation forts bien que les meilleurs facteurs de bruit soient obtenus avec des courants faibles. Le problème se complexifie en sachant que la température et le facteur de bruit sont en opposition, traduisant le fait que plus le composant est chaud et moins bon est le facteur de bruit. Les paramètres à traiter sont la bande de fréquences, le courant continu et le biais en tension avec la dissipation, la stabilité et le gain, l'adaptation en entrée et en sortie, et le découplage des alimentations pour éviter le bruit ramené au niveau de l'amplificateur.

Le facteur de bruit $Fb$ d'une chaîne d'amplification se calcule par la formule suivante :

$$Fb = Fb1 + \frac{Fb2 - 1}{G1} + \frac{Fb3 - 1}{G1.G2} + ...\qquad(1)$$

*Fb*1*, Fb*2*, Fb*3*...* étant respectivement les facteurs de bruit de la première chaîne, de la deuxième chaîne, de la troisième chaîne et ainsi de suite. *G*1*, G*2*, G*3 ... sont les gains associés respectivement à ces mêmes chaînes. La relation (1) montre que le facteur de bruit du premier élément de la chaîne *Fb*1 peut être plus ou moins prépondérant selon la valeur des gains, notamment du gain *G*1 de la première chaîne d'amplification. Ce gain *G*1 joue donc un rôle très important pour le facteur de bruit *Fb* de la chaîne globale. Plus ce gain est grand, plus on risque de saturer la chaîne de réception mais meilleur est le facteur de bruit *Fb* puisque les facteurs de bruits des autres chaînes sont atténuées par *G*1. Dans l'exemple du dispositif de la figure 1, c'est donc le gain du LNA 1 qui est le paramètre clé. La commande du LNA 1 doit donc faire en sorte que celui-ci reste en fonctionnement linéaire mais de ne surconsommer qu'en présence de signaux forts. Il faut aussi optimiser le facteur de bruit quand les signaux à recevoir sont très faibles. La mise en place conditionnelle de tensions élevées ou de courants de polarisation élevés permettant de garder cette linéarité peut aussi s'appliquer sur le mélangeur 3 ainsi qu'aux autres circuits de la chaîne, permettant d'optimiser la consommation de ces circuits. Une extrapolation peut aussi permettre de couper les alimentations en cas de puissance d'entrée trop élevée, dangereuse. Les puissances d'entrée provoquent un échauffement du LNA 1 entraînant sa destruction. La détection de l'élévation de température est trop lente pour protéger le composant. La détection de la puissance de sortie, obtenue par la mesure 8 de l'amplitude du signal de sortie, et son extrapolation permet de couper les alimentations suffisamment tôt, de façon dynamique, et donc de protéger efficacement le LNA.

On décrit maintenant la commande dynamique du LNA 1 et des autres composants. Un circuit commande variable 101 est associé au LNA. Par cette commande 101 on peut faire varier le courant de drain ou la tension d'alimentation du LNA. La commande en tension peut être réalisée par un simple sélecteur, par exemple des commutateurs à base de transistors FET, des MEMs ou tout autre système de commutation connu. La commande en courant peut être rendu variable par court-circuit de résistance à l'aide de transistors FET ou de MEMs ou tout autre dispositif, par des diodes Zéner ou tout autre système de commande en courant connu, commande discrète ou continue.

Afin d'illustrer les avantages apportés par l'invention, on considère un LNA en technologie GaN.

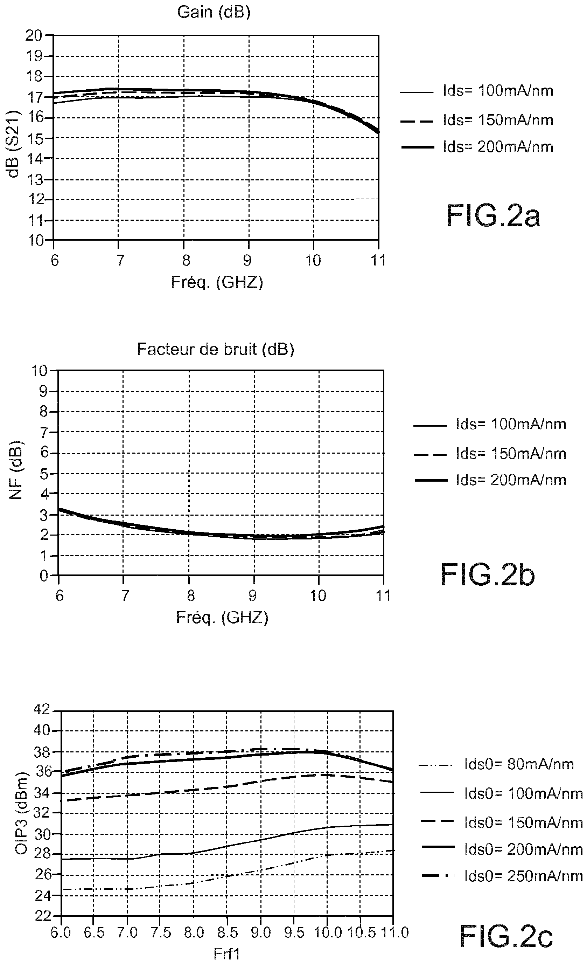

Les figures 2a, 2b et 2c montrent par des courbes respectivement la variation du gain en puissance, du facteur de bruit et des performances de linéarité (OIP3) en fonction du courant de polarisation, plus particulièrement du courant de drain Ids, exprimé en mA. Pour chaque figure, une courbe correspond à un niveau de courant Ids. Toutes ces courbes sont données pour une tension d'alimentation donnée du LNA. L'invention exploite avantageusement les résultats illustrés par ces courbes.

Les courbes de la figure 2a représentent le gain de transmission, correspondant au coefficient S21 de la fonction de transfert du LNA, exprimé en dB en fonction de la fréquence. La figure 2a présente à titre d'exemple trois courbes correspondant à Ids = 100 mA, Ids = 150 mA et Ids = 200 mA. Les courbes de la figure 2b représentent le facteur de bruit (NF) exprimé en dB en fonction de la fréquence pour ces trois mêmes valeurs de courant de polarisation.

Les courbes de la figure 2c présentent les performances de linéarité représentées par la grandeur IP3, exprimée en dBm, en fonction de la fréquence. La figures 2c comporte cinq courbes correspondant aux cinq valeurs suivantes du courant de polarisation Ids : 80 mA, 100 mA, 150 mA, 200 mA et 250 mA.

Ces courbes montrent clairement que les performances de gain et de bruit ne sont que très peu affectées par les modifications de consommation, fonction du courant Ids, alors qu'une dynamique de plus de 10 dBm est observée sur l'IP3. On pourra jouer sur la tension de polarisation du LNA, en commutant cette dernière d'une valeur à une autre en fonction des performances de linéarité attendues, par extrapolation.

Pour être efficace, il faut les temps de réaction du LNA pour passer d'un niveau de courant de polarisation à un autre n'excède pas quelques dizaines de nanosecondes, cela dépendant néanmoins du type d'application.

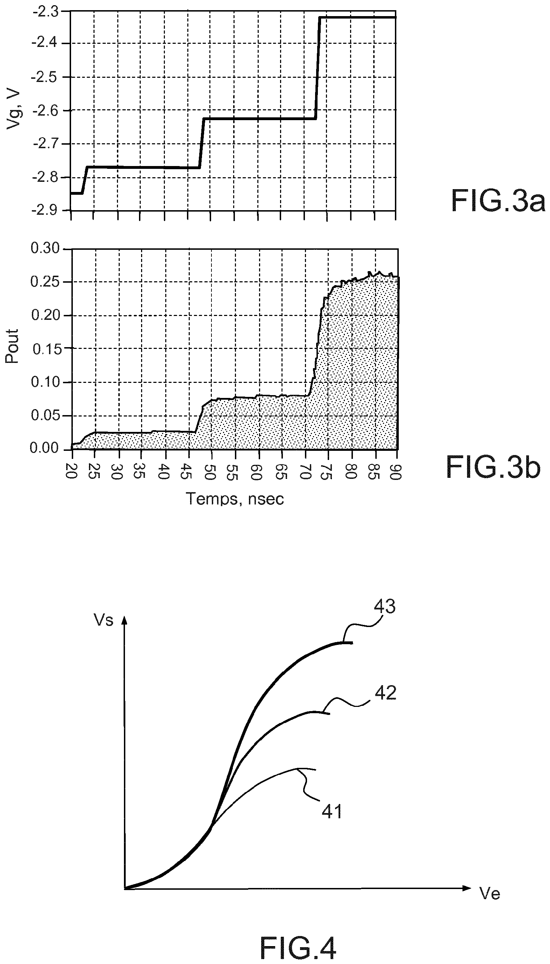

Les figures 3a et 3b illustrent la commutation du signal pour plusieurs niveaux de tension de polarisation du LNA. La figure 3a illustre par une courbe en escalier, fonction du temps, le niveau relatif de tension. A chaque instant où le transistor n'est plus linéaire, on passe au niveau de tension supérieur, le courant de polarisation Ids et la tension de polarisation étant choisi de façon à fonctionner linéairement avec la plus faible puissance possible. La puissance en sortie du LNA est illustrée en figure 3b, la puissance augmente avec la tension de polarisation.

Pour éviter toute saturation, dommageable dans un capteur radar ou dans un ESM, il est nécessaire d'anticiper à chaque récurrence le point de fonctionnement pour éviter d'avoir un traînage et une saturation sur des signaux faibles.

Plusieurs solutions prédictives peuvent alors être envisagées :

- Contrôler directement la tension du LNA 1 et son courant de polarisation avec une fonction de transfert du signal de sortie, dans ce cas la marge de courant de polarisation doit être suffisante pour que les fronts du signal ne soient pas saturant ;
- Extrapoler les variations du signal de sortie pour prédire les variations futures du signal d'entrée et ainsi s'adapter à la dynamique linéaire juste nécessaire, avec une marge de sécurité minimale pour la linéarité ;

- Utiliser des seuils de détection du signal de sortie pour changer les valeurs du courant de polarisation et de la tension d'entrée de façon à ce que la marge de sécurité garantissant un signal linéairement amplifié soit respecté.

Les évolutions possibles du signal d'entrée (sa bande passante) permettent de connaître les pentes maximales possibles. Les gains envisagés sont fonction du niveau moyen des signaux reçus. En règle générale, ces signaux ne nécessitent pas de linéarité importante car leur dynamique est faible pendant plus de ¾ du temps. Les gains escomptés sont donc de plus d'un facteur 3 par rapport à la consommation initiale. Ceci permet de dimensionner en conséquence les alimentations et le refroidissement.

Une solution complémentaire consiste à utiliser la stationnarité des signaux d'une récurrence à l'autre. Les variations de dynamique importantes sont rare d'une récurrence à l'autre à la même case distance et on peut par exemple utiliser les informations d'amplitude de la récurrence précédente, ou une fonction de transfert des récurrences précédentes pour une programmation de la dynamique de la chaîne de réception permettant d'ajuster au mieux la consommation.

Cette fonction est importante pour les antennes actives où la formation du faisceau de réception par des déphaseurs des modulateurs d'amplitude est dimensionnée pour le pire cas, ce qui entraîne une surconsommation multipliée par le nombre de modules nécessaires à la formation du faisceau. Une optimisation de cette chaîne entraîne donc des gains très importants dans l'énergie mise en oeuvre.

On revient à la figure 1. L'amplitude du signal en sortie du convertisseur 6 est donc mesurée 8. Plus particulièrement, la valeur numérisée en sortie du convertisseur est échantillonnée à chaque récurrence. Ce niveau du signal de sortie est alors une donnée d'entrée de la cartographie 2. En fonction d'une part de la valeur du signal reçu à la récurrence courante, valeur donnée par la mesure 8, et d'autre part d'une mesure du temps, donnée par un dispositif de chronométrie 9, une lecture anticipée du signal de la prochaine récurrence peut être réalisée. Dans le cas d'une application radar, cette lecture 10 est faite par des moyens de traitement, par exemple un calculateur. Cette lecture anticipée est en fait une estimation ou prédiction de la valeur du prochain signal reçu. La commande du gain du LNA 1 en tension d'alimentation ou en courant de polarisation dépend de cette lecture anticipée. En d'autres termes, le circuit de commande variable 101 délivre cette tension ou ce courant au LNA en fonction de cette lecture anticipée. Un tel circuit 101 peut être une source de tension ou une source de courant commandable, la commande étant issu des moyens de traitement.

Cette optimisation de la commande du LNA 1 peut être complétée par une optimisation de la consommation d'énergie des amplificateurs 104, 105 servant à faire le mélange et l'amplification des signaux en fréquence intermédiaire, cette fréquence intermédiaire étant générée par un oscillateur local OL. Ainsi comme pour le LNA 1, une commande variable 103 est appliquée pour commander l'intensité du signal d'oscillateur local OL entrant dans le mélangeur 3, plus particulièrement cette commande est appliquée à l'amplificateur 104 amplifiant le niveau du signal issu de l'oscillateur local, la sortie de l'amplificateur 104 étant reliée à une entrée du mélangeur, l'autre entrée du mélangeur étant reliée à la sortie du LNA 1. Comme pour ce dernier, la commande 103 s'applique sur le courant de polarisation ou sur l'alimentation de l'amplificateur 104.

Ainsi, pour éviter toutes les saturations, la voie OL est amplifiée 104 au maximum et le mélangeur 3 est donc utilisé dans sa zone linéaire. Cette contrainte d'amplification de la voie OL n'a pas lieu d'être pour les petits signaux. Une amplification adaptée peut alors être faite suivant les mêmes critères que ceux appliqués au LNA. Dans l'exemple de réalisation de la figure 1, on utilise comme signal d'entrée de la commande variable 103 de la voie OL le même signal d'entrée que pour la commande variable 101 du LNA, c'est-à-dire issu de la détection et de l'extrapolation de commande de polarisation et d'alimentation des LNA, fonction de la cartographie 2. De même, une commande variable 105 s'applique sur l'amplificateur 5 en sortie du filtre, en courant de polarisation ou en tension d'alimentation, selon la technologie.

Les commandes variables appliquent 101, 103, 105 en fait une consigne de consigne de consommation d'énergie aux composants, cette consigne pouvant s'appliquer soit par une consigne de tension d'alimentation, soit par une consigne de courant de polarisation. La valeur de consigne est appliquée en fonction de la valeur extrapolée, ou anticipée 10, définie à partir de l'historique contenu dans la table 2. On sait, en fonction de cette valeur extrapolée quelle consigne appliquer, notamment en fonction des caractéristiques de fonctionnement des composants.

Dans le cas d'un radar agile en balayage, une commande globale de toute la chaîne de réception avec prise en compte de la récurrence précédente ou de la récurrence de tour d'antenne à tour précédent, couplé à une extrapolation en fonction des cases distances permet de générer une commande générale d'adaptation de la dynamique. Le signal de commande générale est par exemple appliqué aux circuits de commande variables 101, 103, 105 précédents.

En fonction de la tension d'alimentation et du courant de drain, le niveau de saturation évolue suivant des courbes différentes comme le montre la figure 4. Trois courbes 41, 42, 43 représentent le signal de sortie Vs en fonction du signal d'entrée pour différentes valeurs de tensions d'alimentation et de courant de polarisation (courant drain).

Lorsque la saturation est repoussée à la limite maximale 43, la consommation est aussi maximale. Une optimisation du paramétrage en courant et en tension est donc possible à condition d'avoir une boucle de réaction courte et de pouvoir anticiper les moments nécessitant une forte dynamique. La consommation peut par exemple varier d'un facteur 6 en fonction de la dynamique à traiter.

Statistiquement les dynamiques des signaux à traiter ne sont saturant que pendant quelque pourcents du temps, environ 10%. Dimensionner une chaîne de réception au pire cas, comme cela est généralement fait dans les solutions de l'art antérieur, n'est donc pas optimum. Il est possible de définir des seuils de dynamiques ou de faire varier continument la commande 101, 103, 105 pour s'adapter à la dynamique souhaitée. Dans ce cas, le calcul d'une moyenne glissante et d'un écart type glissant peut être utilisé pour sélectionner le seuil approprié qui peut être lié à la moyenne et à un multiple de l'écart type. Le choix du coefficient du multiple dépend de la tolérance à la saturation que l'on accepte pour la performance souhaitée de la consommation. C'est un compromis qui peut lui-même être évolutif et changer de façon dynamique a posteriori. La comparaison de cette valeur à un jeu de seuils ou la commande continue du courant sont alors possibles. Une autre possibilité consiste à stocker toutes les valeurs de dynamique dans la carte mémoire, contenant la cartographie 2, pendant le premier tour d'antenne et ensuite d'appliquer une fonction de cette carte de dynamique pour choisir la fonction la plus adaptée qui optimise la consommation, c'est-à-dire la plus proche du seuil de saturation.

Cette carte mémoire est adressée par la valeur mesurée 8 du signal reçu d'une part et par les informations distance et azimut du radar d'autre part. un recalage est effectué en fonction des mouvements du porteur du radar, le recalage s'effectuant par exemple par un glissement des adresses en fonction du déplacement. En effet, le niveau de puissance de signal prédit pour la récurrence suivante dépend de la dernière valeur mesurée 8 du signal reçu (dynamique), de la distance à la cible et de l'azimut de la cible. Cette valeur prédite peut être prédéterminée et accessible via les adresses fonction de ces trois paramètres. Ainsi, la valeur prédite est dans une case mémoire dont l'adresse dépend de la valeur mesurée 8, de l'azimut et de la distance de la cible. Pour tenir compte du mouvement du porteur et de son incidence sur le niveau de puissance du signal reçu, on se décale vers d'autres cases mémoires, selon les deux dimensions de distance et d'azimut. Le nombre d'adresses décalées en distance et azimut dépend de la vitesse du porteur. La granulométrie de la carte mémoire dépend notamment du degré d'optimisation de la consommation souhaitée. Cette granulométrie correspond au degré d'échantillonnage des grandeurs physiques adressant les valeurs mémorisées dans la carte mémoire, les triplets d'adresses étant les valeurs échantillonnées. Ces grandeurs sont la mesure 8 du signal reçu, la distance de la cible et son azimut.

En fonction de la distance et de l'azimut de la cible détectée, on est donc en mesure de prédire le niveau du prochain signal reçu. La granularité de cette carte mémoire dépend par ailleurs du degré d'optimisation de la consommation souhaitée.

La chaîne de réception complète 1, 3, 4, 5, 6 peut être paramétrée en fonction de la dynamique estimée. L'attaque du mélangeur 3 par un niveau saturant, qui est obligatoire pour éviter les harmoniques non désirées, peut être aussi faite de façon proportionnelle à la dynamique souhaitée.

La lecture de la carte mémoire 2 contenant la dynamique ou une fonction de transfert de celle-ci, recalée temporellement permet d'anticiper les niveaux de signaux futurs reçus, sans trop de risque de saturation et permet d'atteindre un compromis entre la consommation optimum et l'absence de saturation souhaitée. Comme indiqué précédemment, la compensation de la vitesse du porteur doit être effectuée pour recaler les mesures en fonction de la nouvelle position en cas d'un porteur mobile.

Il est aussi possible d'utiliser la première récurrence d'une rafale pour dimensionner la dynamique. La première récurrence d'une rafale avec agilité de fréquence est généralement inexploitée, notamment pour des problèmes d'instabilité thermique liés aux changements de puissance moyenne des transistors d'émission. Il est possible d'utiliser cette première récurrence pour calibrer les niveaux de dynamique reçus. Un pré-positionnement du courant de drain à la valeur maximale permet d'éviter tout risque de saturation. La valeur numérisée peut alors être appliquée dans la table 2, formant la cartographie, pour faire correspondre la commande du courant de drain souhaité, c'est-à-dire la consommation, avec l'amplitude du signal composé du signal fixe et du signal mobile.

Dans un fonctionnement continu, le but est d'être au plus près possible de la dynamique prévisible. Pour éviter l'utilisation d'une carte de clutter, un calcul transverse peut être établi. En première approximation, la première récurrence émise est prise en tant que référence. Le traitement consiste alors à nourrir un filtre en azimut permettant d'extrapoler la dynamique maximale en minimisant le risque de saturation et en étant au plus près de la consommation optimale. Un calcul en transverse de la moyenne glissante sur par exemple la moitié de la largeur du lobe d'antenne, doublé d'un calcul de l'écart type (pour le traitement des échos mobiles), par tranches distance. La finesse d'une tranche dépend du niveau d'optimisation recherché, cela peut aller jusqu'à un calcul par case distance. Le seuil de saturation, c'est-à-dire le courant de polarisation des transistors, est par exemple fixé par rapport à la moyenne augmentée d'un multiple de l'écart type en valeur absolue.

Les variations de dynamique en absolu sont à optimiser en fonction du risque de variation d'amplitude des niveaux des petits signaux. Une application du changement de la consigne est par exemple faite en fonction de l'instant d'échantillonnage, si possible sur front descendant des horloges du codeur 6 (en assumant que le codage se fait sur front montant), de façon à minimiser les risques de fluctuation de niveau liés aux glitchs et aux changements d'état.

La consigne à appliquer dans une case N, pour la moyenne est ;

$$/X = \sum_{N-l/2}^{N} \frac{Ai}{\dfrac{l}{2}}$$

pour l'écart type est :

$$\sigma_N := \sqrt[2]{\frac{2}{l} * (\sum_{N-\frac{l}{2}}^{N}(Ai)^2) - /X^2}$$

Où :

- *l* est nombre de récurrences dans le lobe d'antenne ;
- /X est la moyenne glissante sur le demi-lobe d'antenne ;
- $\sigma_N$ est l'écart type glissant sur le demi lobe d'antenne ;
- Ai est l'amplitude du signal de rang i, mesurée 8 en sortie du codeur 6.

La dynamique considérée est par exemple la valeur moyenne glissante plus 2 à 3 fois l'écart type glissant dans la case distance considéré. Des approximations pour faciliter le calcul sont envisageable tels que :

- le calcul du maximum des signaux glissants dans les cases au lieu de la moyenne ;
- un multiple de la différence entre l'amplitude minimum glissante et l'amplitude maximum glissante peut être pris au lieu de l'écart type glissant.
- la somme glissante des valeurs absolues des différences.

Dans une solution minimaliste, la consigne peut être basée sur la récurrence précédente plus un talon fixe correspondant à l'amplitude des signaux mobiles et la variation de gain du lobe d'antenne.
Un des avantages d'une telle conception est notamment qu'elle permet de dimensionner les alimentations sur le niveau moyen des signaux, intégrés dans l'ensemble du tour d'antenne. Il en est de même pour la dissipation qui peut être optimisée grâce à cette fonction.
Si le dimensionnement est fait pour cette valeur, cela correspond environ au tiers de la puissance dissipée et donc du besoin en alimentation de la fonction de réception.

**Revendications**

1. Procédé de gestion de la consommation énergétique d'au moins un composant électronique (1, 3, 5) dans une chaîne de réception radar , **caractérisé en ce qu'**il comporte une étape préliminaire d'élaboration d'une table (2) contenant des valeurs représentatives du niveau de puissance de signaux reçus, chacune desdites valeurs étant contenue dans une case adressée au moins par un triplet formé d'une grandeur correspondant à une mesure du niveau de puissance d'un signal reçu d'une cible, d'une grandeur correspondant à la distance deladite cible et d'une grandeur correspondant à l'azimut de ladite cible, ledit procédé effectuant pour chaque signal reçu, issu d'une récurrence radar d'ordre n, les étapes suivantes :

   - une étape de lecture de mesure (8) du niveau puissance du signal reçu ;
   - une étape d'adressage de ladite table (2) en fonction de ladite mesure, de la distance et de l'azimut de ladite cible, une première valeur de niveau de puissance étant alors adresssée ;
   - une étape d'extrapolation du niveau de puissance du prochain signal reçu issue de la récurrence radar suivante d'ordre n+1, fonction de ladite première valeur et d'un nombre donné de valeurs de ladite table adressées par glissement d'adresses depuis l'adresse de ladite première valeur selon les adresses de mesure de niveau de puissance, ledit nombre donné étant fonction de la vitesse du porteur de ladite chaîne de réception, ladite étape étant appliquée pour le signal reçu d'ordre n+1,

   la valeur de consigne de la consommation dudit au moins composant électronique étant fonction au moins de l'extrapolation du niveau de puissance reçu et de la position de ladite cible.

2. Procédé selon la revendication 1, **caractérisé en ce que**, les signaux étant reçus par récurrences, par rafale et/ou par tour d'antenne couplée à ladite chaîne de réception, ladite table (2) comporte des valeurs représentatives du niveau de puissance de signaux reçus dans la récurrence précédente, dans la rafale précédente et/ou dans les tours d'antenne précédents.

3. Procédé selon l'une quelconque des revendications 1 ou 2, **caractérisé en ce que** les grandeurs du triplet étant des valeurs échantillonnées de mesure, de distance et d'azimut.

4. Procédé selon l'une quelconque des revendications précédentes, **caractérisé en ce que** les adresses sont décalées en distance et en azimut selon les mouvements du porteur de ladite chaîne de réception.

5. Procédé selon l'une quelconque des revendications précédentes, **caractérisé en ce que** l'extrapolation est égale à l'amplitude moyenne de la première valeur adressée et des M valeurs adressées par glissement d'adresse, augmentée de K fois l'écart type.

6. Procédé selon l'une quelconque des revendications précédentes, **caractérisé en ce que** la consigne de consommation est déterminée par la consigne de la tension d'alimentation dudit composant (1, 3, 5).

7. Procédé selon l'une quelconque des revendications précédentes, **caractérisé en ce que** la consigne de consommation est déterminée par la consigne du courant de polarisation dudit composant (1, 5).

8. Procédé selon l'une quelconque des revendications précédentes, **caractérisé en ce que** l'alimentation dudit au moins composant est mise à zéro lorsque ledit niveau de puissance dépasse un seuil donné.

9. Procédé selon l'une quelconque des revendications précédentes, **caractérisé en ce que** ledit au moins composant est un amplificateur faible bruit (1).

10. Chaîne de réception de signaux électromagnétiques mettant en oeuvre le procédé selon l'une quelconque des revendications précédentes, **caractérisé en ce qu'**elle comporte au moins un amplificateur faible bruit (1) dont la consommation énergétique est fonction d'une consigne définie par ledit procédé, un convertisseurs analogique-numérique (6) convertissant les signaux issus dudit amplificateur (1) et une table (2) contenant des valeurs représentatives du niveau de puissance de signaux reçus.

11. Chaîne de réception selon la revendication 10, **caractérisé en ce qu'**elle comporte en outre :

- un mélangeur (3) en sortie de l'amplificateur faible bruit (1), ledit mélangeur mélangeant le signal issu de l'amplificateur faible bruit avec un signal d'oscillateur local, la consommation énergétique dudit mélangeur étant fonction d'une consigne définie par ledit procédé ;
- filtre (4) filtrant le signal mélangé en sortie du mélangeur (3) ;
- un amplificateur (5) dont l'entrée est reliée à la sortie du filtre (4) et connecté en sortie à l'entrée dudit convertisseur analogique-numérique (6), la consommation énergétique dudit amplificateur (5) étant définie par ledit procédé.

**Patentansprüche**

1. Managementverfahren des Energieverbrauchs von mindestens einer elektronischen Komponente (1, 3, 5) in einer Radar-Aufnahmekette, **dadurch gekennzeichnet, dass** es einen vorherigen Schritt der Erstellung einer Tabelle (2) umfasst, die repräsentative Werte der Leistungsebene erhaltener Signale enthält, wobei jeder der Werte in einem Feld enthalten ist, das mindestens von einer Dreiergruppe adressiert wird, bestehend aus einer Größe entsprechend einer Messung der Leistungsebene eines erhaltenen Signals eines Ziels, einer Größe entsprechend dem Abstand des Ziels und einer Größe entsprechend dem Azimut des Ziels, wobei das Verfahren für jedes erhaltene Signal, das aus einer Radarwiederholung der Ordnung n hervorgeht, die folgenden Schritte durchführt:

- einen Ablesungsschritt der Messung (8) der Leistungsebene des erhaltenen Signals;
- einen Adressierungsschritt der Tabelle (2) in Abhängigkeit von der Messung, dem Abstand und dem Azimut des Ziels, wobei dann ein erster Wert der Leistungsebene adressiert wird;
- einen Extrapolationsschritt der Leistungsebene des nächsten erhaltenen Signals, das aus der Radarwiederholung der Ordnung n+1 hervorgeht, und das von einem ersten Wert und einer gegebenen Anzahl Werte der Tabelle abhängt, die durch Adressverschiebung nach der Adresse des ersten Werts gemäß den Adressen der Messung der Leistungsebene abhängt, wobei die gegebene Anzahl von der Geschwindigkeit des Trägers der Aufnahmekette abhängt, wobei der Schritt für das erhaltene Signal der Ordnung n+1 angewendet wird,

der Wert des Vorgabewerts des Verbrauchs der mindestens einen elektronischen Komponente von mindestens der Extrapolation der erhaltenen Leistungsebene und von der Position des Ziels abhängt.

2. Verfahren nach Anspruch 1, **dadurch gekennzeichnet, dass** die Signale durch Wiederholungen, durch Impulsfolge und/oder durch Umdrehungen der Antenne, die mit der Aufnahmekette gekoppelt ist, erhalten werden, wobei die Tabelle (2) repräsentative Werte der Leistungsebene erhaltener Signale in der vorherigen Wiederholung, in der vorherigen Impulsfolge und/oder in den vorherigen Antennenumdrehungen umfasst.

3. Verfahren nach einem der Ansprüche 1 oder 2, **dadurch gekennzeichnet, dass** die Größen der Dreiergruppe erfasste Werte der Messung, des Abstands und des Azimuts sind.

4. Verfahren nach einem der vorherigen Ansprüche, **dadurch gekennzeichnet, dass** die Adressen in Abstand und in Azimut gemäß den Bewegungen des Trägers der Aufnahmekette versetzt sind.

5. Verfahren nach einem der vorherigen Ansprüche, **dadurch gekennzeichnet, dass** die Extrapolation gleich der mittleren Amplitude des ersten adressierten Werts und der M adressierten Werte durch Adressverschiebung erhöht um das K-fache der Standardabweichung ist.

6. Verfahren nach einem der vorherigen Ansprüche, **dadurch gekennzeichnet, dass** der Verbrauchsvorgabewert durch den Vorgabewert der Versorgungsspannung der Komponente (1, 3, 5) bestimmt ist.

7. Verfahren nach einem der vorherigen Ansprüche, **dadurch gekennzeichnet, dass** der Verbrauchsvorgabewert durch den Vorgabewert des Polarisationsstroms der Komponente (1, 5) bestimmt ist.

8. Verfahren nach einem der vorherigen Ansprüche, **dadurch gekennzeichnet, dass** die Versorgung der mindestens einen Komponente auf null gesetzt wird, wenn die Leistungsebene einen gegebenen Schwellenwert überschreitet.

9. Verfahren nach einem der vorherigen Ansprüche, **dadurch gekennzeichnet, dass** die mindestens eine Komponente ein rauscharmer Verstärker (1) ist.

10. Aufnahmekette elektromagnetischer Signale, die das Verfahren nach einem der vorherigen Ansprüche umsetzt, **dadurch gekennzeichnet, dass** sie mindestens einen rauscharmen Verstärker (1) umfasst, dessen Energieverbrauch von einem Vorgabewert abhängt, der durch das Verfahren definiert ist, einen Analog-Digital-Wandler (6), der die vom Verstärker (1) ausgegebenen Signale umwandelt und eine Tabelle (2), die repräsentative Werte der Leistungsebene der erhaltenen Signale enthält.

11. Aufnahmekette nach Anspruch 10, **dadurch gekennzeichnet, dass** sie außerdem umfasst:

- einen Mischer (3) am Ausgang des rauscharmen Verstärkers (1), wobei der Mischer das ausgegebene Signal vom rauscharmen Verstärker mit einem Signal des lokalen Oszillators mischt, wobei der Energieverbrauch des Mischers von einem Vorgabewert abhängt, der durch das Verfahren definiert ist;
- einen Filter (4), der das gemischte Signal am Ausgang des Mischers (3) filtert;
- einen Verstärker (5), dessen Eingang mit dem Ausgang des Filters (4) verbunden ist, und der am Ausgang mit dem Eingang des Analog-Digital-Wandlers (6) verbunden ist, wobei der Energieverbrauch des Verstärkers (5) durch das Verfahren definiert ist.

**Claims**

1. A method for managing the energy consumption of at least one electronic component (1, 3, 5) in a radar reception chain, **characterized in that** it comprises a preliminary step of formulating a table (2) containing values representative of the power level of received signals, each of said values being contained in a bin addressed at least by a triplet formed of a quantity corresponding to a measurement of the power level of a signal received from a target, of a quantity corresponding to the distance of said target and of a quantity corresponding to the azimuth of said target, said method performing for each received signal, arising from a radar recurrence of order n, the following steps:

- a step of a reading of a measurement (8) of the power level of the received signal;
- a step of addressing said table (2) as a function of said measurement, of the distance and of the azimuth of said target, a first power level value then being addressed;
- a step of extrapolating the power level of the next received signal arising from the following radar recurrence of order n+1, dependent on said first value and on a given number of values of said table addressed by sliding of addresses from the address of said first value according to the power level measurement addresses, said given number being dependent on the speed of the carrier of said reception chain, said step being applied for the received signal of order n+1,

the setpoint value of the consumption of said at least electronic component being dependent at least on the extrapolation of the power level received and the position of said target.

2. The method as claimed in claim 1, **characterized in that**, the signals being received by recurrences, per burst and/or per revolution of antenna coupled to said reception chain, said table (2) comprises values representative of the power level of signals received in the previous recurrence, in the previous burst and/or in the previous antenna revolutions.

3. The method as claimed in either one of claims 1 or 2, **characterized in that** the quantities of the triplet being sampled values of measurement, of distance and of azimuth.

4. The method as claimed in any one of the preceding claims, **characterized in that** the addresses are shifted in distance and in azimuth according to the motions of the carrier of said reception chain.

5. The method as claimed in any one of the preceding claims, **characterized in that** the extrapolation is equal to the mean amplitude of the first addressed value and of the M values addressed by address sliding, increased by K times the standard deviation.

6. The method as claimed in any one of the preceding claims, **characterized in that** the consumption setpoint is determined by the setpoint of the supply voltage of said component (1, 3, 5).

7. The method as claimed in any one of the preceding claims, **characterized in that** the consumption setpoint is determined by the setpoint of the bias current of said component (1, 5).

8. The method as claimed in any one of the preceding claims, **characterized in that** the power supply of said at least component is set to zero when said power level exceeds a given threshold.

9. The method as claimed in any one of the preceding claims, **characterized in that** said at least component is a low noise amplifier (1).

10. An electromagnetic signals reception chain implementing the method as claimed in any one of the preceding claims, **characterized in that** it comprises at least one low noise amplifier (1) whose energy consumption is dependent on a setpoint defined by said method, an analog-digital converter (6) converting the signals arising from said amplifier (1) and a table (2) containing values representative of the power level of received signals.

11. The reception chain as claimed in claim 10, **characterized in that** it furthermore comprises:

- a mixer (3) at the output of the low noise amplifier (1), said mixer mixing the signal arising from the low noise amplifier with a local oscillator signal, the energy consumption of said mixer being dependent on a setpoint defined by said method;
- a filter (4) filtering the mixed signal at the output of the mixer (3);
- an amplifier (5) whose input is linked to the output of the filter (4) and connected at output to the input of said analog-digital converter (6), the energy consumption of said amplifier (5) being defined by said method.

FIG.1

EP 3 061 193 B1

Gain (dB)

FIG.2a

Facteur de bruit (dB)

FIG.2b

FIG.2c

FIG.3a

FIG.3b

Temps, nsec

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050104766 A